# EUROPEAN PATENT APPLICATION

(11) **EP 1 162 800 A2**
(43) Date of publication of application: **12.12.2001**
(21) Application number: 01000153.5
(22) Date of filing: 18.05.2001
(51) Int. Cl.: H04L 12/58

(54) **Method for video messaging**

(30) Priority: 18.05.2000 US 205638
(71) Applicant: Texas Instruments Incorporated, Dallas, Texas 75251 (US)
(72) Inventor: Gonsalves, Charles J., Texas 75070, McKinney (US)
(74) Representative: Holt, Michael

(57) **Abstract**

In a method of video messaging a transmission station (110) records a video message in digital form and transmitting it to a predetermined reception station (130). The reception station (130) stores the received video message in a nonvolatile memory (134) . At a time other than reception of the video message, the reception station (130) displays the stored video message to a user. The video message may be encoded at the transmission station (110) and decoded at the reception station (130) . The transmission station (110) may transmit a digital attachment file with the video message, such as a word processing document, a spreadsheet document, a digital still picture, an audio file or a video clip. The reception station (130) preferably uses a television receiver (141) to display the video message. Video messages may be archived at the reception station (130) using a video cassette recorder (143) .

## Description

### TECHNICAL FIELD OF THE INVENTION

The technical field of this invention is the area of exchange of video and particularly video messaging and video answering.

### BACKGROUND OF THE INVENTION

Current technology is sufficient to permit real time video conferencing. However, despite the state of technology, video conferencing has never been widely used. A number of factors which combine to prevent widespread use of video conferencing. These include the cost necessary to provide high quality video. Typical video conferencing terminals cost more than $200 using current technology. Existing implementations of video conferencing are geared toward the personal computer as the hub device. These systems typically rely on analog modem technology. The picture quality is perceived as poor, typically providing 1/4 or 1/8th Sif and frame rates in the region of 7 to 13 frames per second. This quality video handles motion poorly, producing a jerky feeling to the display. Video conferencing also provides a number of additional issues. Typically a video conference must be prearranged so that all parties are available at the time of the video conference. This causes problems, who wants to gather the family in front of a personal computer to call grandma. Video conferencing produces additional latency issues. Video phones have much the same disadvantages as video conferencing. In addition, there is the interruption factor, who wants to answer the video phone when they just got out of the shower?

### SUMMARY OF THE INVENTION

This invention is a method of video messaging. A transmission station records a video message in digital form and transmitting it to a predetermined reception station. The reception station stores the received video message in a nonvolatile memory. At a time other than reception of the video message, the reception station displays the stored video message to a user. The video message may be encoded at the transmission station and decoded at the reception station.

The transmission station may transmit a digital attachment file with the video message. The attachment file is stored upon reception like the video message. The reception station presents the attachment file in a manner perceivable by a user at a time other than reception of the video message. This attachment may be a word processing document, a spreadsheet document, a digital still picture or a video clip. In this case, the reception station preferably runs a compatible application program. This attachment may be a audio file which is optionally encoded prior to transmission. In this case the reception station generates an aurally perceivable replication of the original audio file.

The reception station uses any suitable display, such as a cathode ray tube, a liquid crystal display, a plasma discharge display or any of the various types of projection displays. In the preferred embodiment, the reception station uses a television receiver to display the video message. In this case, the reception station outputs a television signal modulated according to the transmission standard of the television receiver. Video messages may be archived at the reception station using a video cassette recorder or other storage medium.

### BRIEF DESCRIPTION OF THE DRAWINGS

These and other aspects of this invention are illustrated in the drawings, in which:
Figure 1 illustrates a block diagram of an exemplary embodiment of the hardware used to practice this invention;
Figure 2 illustrates a flow chart of the video message transmission process; and
Figure 3 illustrates a flow chart of the video message reception process.

### DETAILED DESCRIPTION OF PREFERRED EMBODIMENTS

Current technology permits a variation on video conferencing and video phone that is advantageous over those techniques. This technology includes: the greatly expanded use of the Internet; familiarity with e-mail applications; current investments in video delivery over phone lines, such as Microsoft WebTV and AOL-TV; the proliferation of digital video recording devices, such as TiVo; the availability of digital camera and photo services; and the emergence of digital video cameras. This technology infrastructure permits two advantageous video applications. The first application is video messaging. Video messaging is the digital recording and transmission, such as via Internet, of video messages. Video messaging permits high picture quality and full screen video. Video messaging can be accomplished with current technologies. A particular advantage of video messaging is that latency is no longer an issue. The second application is video answering machine. A video answering machine replicates a digitally recorded video message which can be transmitted, such as via the Internet, stored on a fixed disk drive and played back at the user's convenience. Thus a person does not have to worry about answering a video phone when she is wearing her curlers, bathrobe and slippers. Additionally, the recipient does not have to be at home to receive the message.

There are two main applications for video messaging. Video messaging essentially is the delivery of a message that includes video and audio content. This transmission may be over the Internet. This technique is analogous to email. Attachments could be added to the video message. These attachments could be content from analog or digital video cameras, digital still cameras, photo CDs or other video generating or storage media as well as any other digital content. The second application is used in conjunction with video conferencing. A video answering machine provides the ability to leave a video message, when the person you want to video conference with is not available. This is much like the telephone answering machines or voice mail used today.

Current technology permits support of video conferencing capabilities. Other technologies have been developed that allow digital recording of video content. This latter capability is currently being used only for the recording of cable TV or satellite TV programming. Neither of these current applications take full advantage of technology such as the Internet. Neither of these current technologies operate like what people use today, such as email.

The proposed video messaging is non-interactive. Non-interactive, digitized messages can be easily sent over the Internet and buffered or stored. The video quality can be enhanced over that currently provided by video conferencing, since there is not the huge bandwidth requirement necessary for interactive video. Latency is not an issue in video messaging, because this application technology is not interactive. The recipient does not have to be present to participate. The video message can be digitally stored, such as in a hard disk drive, at the receiving end and played back whenever the recipient desires. The recipient does not have to be home. Further, it doesn't matter if the recipient is not properly dressed to receive a video conference. The recipient can reply or forward the video message when and as they desire.

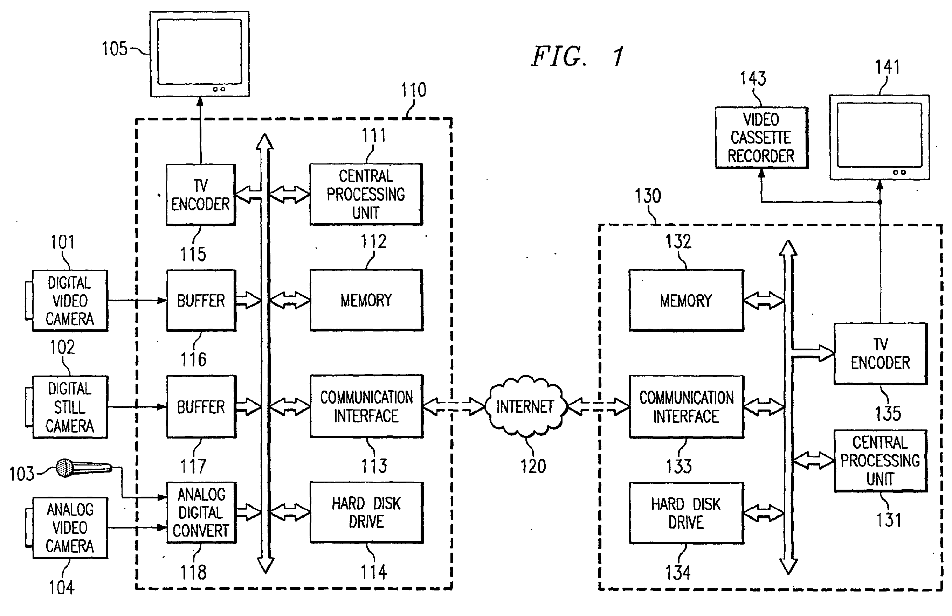

Figure 1 illustrates a block diagram of an exemplary embodiment of the hardware used to practice this invention. Figure 1 illustrates a transmission station including digital video camera 101, digital still camera 102, microphone 103, analog video camera 104, television receiver 105 and transmission appliance 110. Figure 1 illustrates a reception station including reception appliance 130, television receiver 141 and video cassette recorder 143. Transmission appliance 110 and reception appliance 130 could each be a stand alone apparatus, a personal computer or a resident gateway providing Internet connection, server and networking capability to plural computers in the home. Not illustrated in Figure 1 is an input device to receive user commands for the transmission station and the reception station. This could be any input device known in the prior art such as: a keyboard; a keypad; a pointing device like a mouse, a joystick or a track ball; and a touch screen display integral with or separate from television receiver 105.

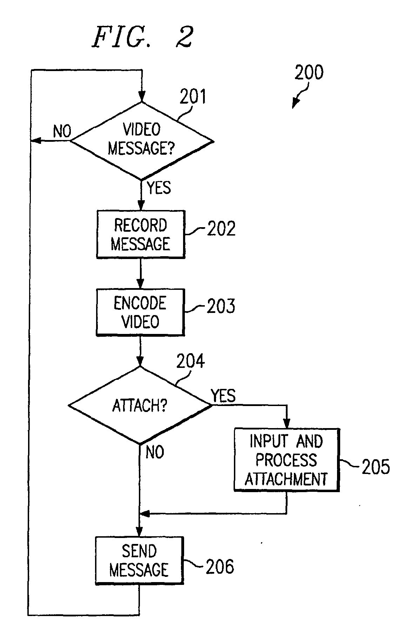

Video message transmission takes place in a manner outlined in Figure 2. Figure 2 illustrates only the general outline of this process. Those skilled in the art would realize that a practical application would require some provision to receive user inputs and commands, such as to initiate video recording, specify the reception station and the like. Program 200 executes on central processing unit 111 of transmission appliance 110. Initially, program 200 continually tests to determine if a video message is to be recorded (decision block 201). Some form of user input would generally be required to initiate this process. Alternatively, central processing unit 111 could be programmed to initiate video recording and transmission upon detection of a predetermined event or set of events, such as expiration of a time period, detection of some external event by a sensor or the like. If not (No at decision block 201), then program 200 repeats this block. If so (Yes at decision block 210), then program 200 controls recording the video message (processing block 202). Figure 1 illustrates alternate hardware for recording the video message. The video message could be captured by digital video camera 101. Such cameras typically include an integral microphone for capturing audio corresponding to the video. This combined video and audio is transmitted to buffer 116 within transmission appliance 110. Digital video cameras typically employ some type of broadband transmission such as 10Bt Ethernet or IEEE 1394, commonly known as FireWire. This connection could also be by way of a Universal Serial Bus (USB) or any other medium providing acceptable transmission bandwidth. Buffer 116 provides temporary storage of the received signal from digital video camera 101 until it can be stored in hard disk drive 114. This data may also be intermediately stored in memory 112 prior to storage in hard disk drive 114. As an alternative, the video message could be captured by analog video camera 104. Figure 1 illustrates microphone 103 separate from analog video camera 104. Analog video cameras of the type proposed typically include an integral microphone as described above with regard to digital video camera 101. However, even with an integral microphone, such an analog video camera typically supplies separate audio and video baseband signals as shown in Figure 1. This differs from the typical digital video camera which supplies a combined digital analog and video signal. The respective audio and video baseband signals are supplied to analog to digital converter 118 in transmission appliance 110. Analog to digital converter 118 converts the respective audio and video baseband signals into digital data streams. These digital data streams are stored in hard disk drive 114 as previously described and optionally may be buffered and temporarily stored in memory 112.

Program 200 next encodes the digital video data (processing block 203). Such data encoding reduces the amount of data that must be transferred to the reception station. Central processing unit 111 recalls the digital video data from hard disk drive 114, encodes it with the selected algorithm and stores the resultant encoded digital video data on hard disk drive 114. Several video encoding standards are known in the art. The MPEG2 (Motion Pictures Expert Group) standard is one of the many standards suitable for this invention. Note that the video data transmission does not need to be in real time as the video is generated. Central processing unit 111 may employ more time for data encoding than the run time of the video message. Following encoding and storage of the encoded file, the original, unencoded digital video data may be discarded to save disk space within hard disk drive 114. Alternatively, the encoded video data need not be stored on hard disk drive 114 but may be simultaneously transmitted via communications interface 113 as it is encoded. Storage is probably necessary if there are to be any attachments described later.

Program 200 next determines whether any other data is to be attached to the video message (decision block 204). If not (No at decision block 204), then program 200 sends the message (processing block 205). This will be further described below. If so (Yes at decision block 205), then program 200 inputs and processes the attachment (processing block 205). An attachment could be text file from another source, a digital still picture from digital still camera 102 by way of buffer 117 or an audio file by way of microphone 103 and analog to digital converter 118. These files may also be encoded using central processing unit 111. The JPEG (Joint Picture Expert Group) standard is a suitable standard for digital still pictures. Several audio encoding standards exist, the MPEG layer 3 standard, known as MP3, is a suitable standard for this invention. As described above in conjunction with digital video data, once encoded the original, unencoded data may be discarded to save space on hard disk drive 114.

The digital video message and any attached file is then transmitted (processing block 206). A number of transmission methods are feasible. It is preferable in this invention to use a broadband connection to the Internet 120 for this transmission. A cable modem or a digital subscriber line (DSL) connection are suitable for this invention. Central processing unit 111 controls transfer of the desired data from hard disk drive 114 to Internet 120 via communications interface 113. Communications interface 113 services any required connection and log on protocols, designation of the destination and then supplies the data to the transmission medium. If the transmission is to be via the Internet, the user of the transmission station must prearrange a relationship with an Internet service provider (ISP) to complete the connection to Internet 120. Communications interface 113 controls transmission of the video message with any attachments for later review at the reception station.

At the transmission station, a video message may be reviewed on television receiver 105. This may occur in real time as the video message is produced via digital video camera 101 or analog video camera 104, or following storage and encoding of the video message. TV encoder 115 receives the video data and produces an appropriate signal for viewing by television receiver 105. In the case of review of encoded data, such as stored on hard disk drive 114 following encoding, central processing unit 111 preferably decodes the data or controls decoding of the data. In this case the decoding preferably takes place in real time as the video is viewed. TV encoder 115 produces a signal compatible with television receiver 105. Television receivers used in North America employ the National Televison Standards Committee (NTSC) standard to receive broadcast signals. Apparatus, such as video cassette recorders or video game consoles, which use a television receiver as a display typically modulate the video and audio signals on a carrier according to the NTSC standard at a frequency within the tuning range of the television receiver. Analog video cameras such as analog video camera 104 typically produce a signal compatible with the NTSC standard. In this case, TV encoder 115 need only recover the original input signal. Digital video camera 101 may employ a differing encoding standard. In this case, TV encoder 115 also needs to transcode the digital video signal to the NTSC standard.

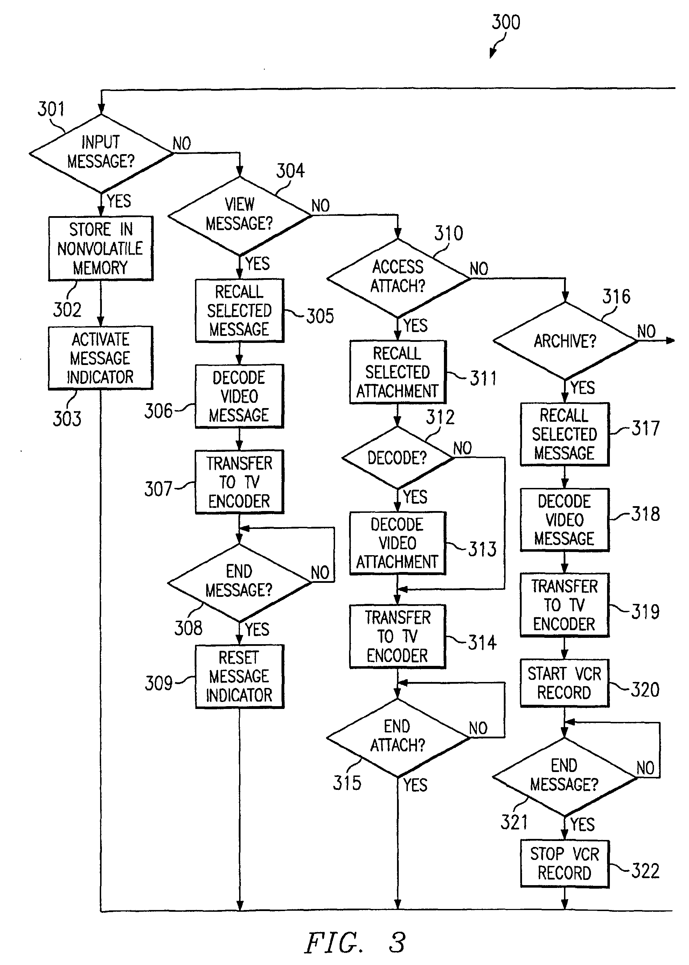

Video message reception takes place in a manner outlined in Figure 3. As described above in conjunction with Figure 2, a practical application would require a manner to be responsive to user commands. Program 300 executes on central processing unit 131 of reception appliance 130. Initially, program 300 includes a polling loop including decision blocks 301, 303, 308 and 314. A negative answer to each of these queries remains in this polling loop. A positive answer to one of these queries branches to a service routine. Following execution of the corresponding service routine, program 300 returns to the polling loop.

Program 300 checks to determine if a video message is received (decision block 301). In the preferred embodiment, reception appliance 130 is connected to Internet 120 via communications interface 133. The nature of communications interface 133 depends upon the type of connection to Internet 120. A dial-up connection via an ordinary telephone line requires communications interface 133 to place a telephone call on the line to the ISP of the user, connect to the ISP server and establish a connection. This process typically includes entry of a user identification and password. In such a case, the determination that a video message has been received will only occur following logging on to Internet 120 via communications interface 133 and the user's ISP. In the case of a DSL or cable modem connection, the connection to Internet 120 is always live and no such log on is required. In this case, determining that a video message has been received may take place on an interrupt basis. Alternatively, communications interface 133 may periodically poll a particular location where the user's ISP stores such messages prior to download. The nature of the reception depends upon the type of transmission medium used in a manner well known to those skilled in the art.

Upon determining a video message has been received (Yes at decision block 301), program 300 stores the video message and any attachments in non-volatile memory (processing block 302). Memory is classified as non-volatile if data is not lost upon removal of electrical power. In the preferred embodiment the video message is transferred from communications interface 133 to hard disk drive 134 and optionally may be buffered in memory 132. Following this storage, program 300 produces a "message received" indication" (processing block 303). Reception appliance 130 preferably produces a user indication that a video message has been received. This user indication could be by a visual message displayed via television receiver 141, an audio alarm produced by the audio channel of television receiver 141 or a separate audio channel (not shown) or any other type of visual or audible indicator. Following indication that a message has been received, program 300 returns to the polling loop at decision block 301.

If a video message has not been received (No at decision block 301), program checks to determine if the user desires to view a previously received and stored video message (decision block 304). As noted above, reception appliance 130 preferably provides an indication to the user when such a video message has been received. If this is the case (Yes at decision block 304), then the desired video message is recalled (processing block 305). This process preferably takes place by soliciting user input as to which video message to view. It is known in the art to provide a visual menu enabling such user selection. This video menu could be displayed via television receiver 141 in a manner that will be described below. Following recall of the selected video message, program 300 decodes the digital video data (processing block 306). This process is the reverse of the encoding process 203 of program 200. The result is recovery of the original video recorded at the transmission station. This decoded video data is supplied to TV encoder 135 for display via television receiver 141 (processing block 307). There are several alternatives for this procedure. In a first alternative, the encoded video data can be recalled from hard disk drive 134, decoded by central processing unit 131 and supplied to TV encoder 135 in real time as the video message is viewed. This requires that central processing unit 131 has the computation capacity to perform the decoding in real time, as fast as data is streaming from hard disk drive 134 to TV encoder 135. Typical video encoding standards do not require as intensive computation for decoding as for encoding. In a second alternative, the decoding can take place slower than real time. In this case, encoded video data is recalled from hard disk drive 134 and decoded by central processing unit 131 at a rate slower than needed to view the video. Decoded video data from central processing unit 131 is then stored at another location on hard disk drive 134. Following decoding of all or part of the video message, central processing unit 131 controls recall of the decoded video data from hard disk drive 134 and routes this data to TV encoder 135. TV encoder 135 operates similarly to TV encoder 115 previously described. TV encoder 135 receives the decoded video data and generates a signal compatible with the technical standard of television receiver 141. Program 300 tests to determine the end of the video message (decision block 308). Upon detection of the end of the video message (Yes at decision block 308), program 300 resets the message received indicator (processing block 309). Thereafter, program 300 returns to the polling loop at decision block 301.

If the user does not select viewing a previously stored video message (No at decision block 304), then program 300 checks to determine if the user wants to access an attachment (decision block 310). In the preferred embodiment the same menu system used to select accessing a video message alerts the user to the presence of one or more video message attachments and permits the user to select accessing any such attachments. If the user selects accessing a video attachment (Yes at decision block 310), program 300 recalls the selected video attachment (processing block 311). Such video attachments are preferably stored on hard disk drive 134. Upon such recall, program 300 checks to determine if the video attachment is encoded (decision block 312). Recall from the above description that encoding of video attachment is optional. Generally picture and audio attachments would be encoded while other attachments, such as text, spreadsheet or computer presentation files would not be encoded. If encoded (Yes at decision block 312), central processing unit 131 would identify the proper encoding standard and decode the attachment (processing block 313). If not encoded (No at decision block 312), program 300 would skip this step.

Following any needed decoding, program 300 transfers the attachment data to TV encoder 135 (processing block 314). The manner of this access depends upon the nature of the attachment. Data files such as text, spreadsheet or presentation data should be displayed in the manner of its originating application. Accordingly, hard disk drive 134 should store a compatible application to enable central processing unit 131 to open and make visible the attachment data. In the case of a picture, such as taken by digital still camera 102, hard disk drive 134 should store a picture viewing program permitting central processing unit 131 to format the picture data for viewing via television receiver 141. Large pictures may either be shrunk by reducing picture resolution for display of the whole picture on television receiver 141 or the picture viewing application programmed to permit viewing less than all the picture and scrolling to view other parts. In the preferred embodiment audio files are accessed via television receiver 141. Central processing unit 131 supplies the audio data to TV encoder 135 in a manner like the soundtrack of a video message. TV encoder 135 generates a signal to television receiver 141 with audio data modulation in the same manner as the soundtrack of a video message. Using this technique no additional audio system is required. Alternatively, reception appliance 130 could be constructed with a separate audio channel (not shown) including a digital to analog converter, an audio amplifier and a speaker.

Following accessing the attachment, program 300 tests to determine if the attachment is complete (decision block 315). This may be the end of an audio file of the user deciding to end a text, spreadsheet or picture viewing program. Program 300 remains in decision block 315 if the attachment is not compete (No at decision block 315). Upon detecting the end of the attachment (Yes at decision block 315), program 300 returns to the polling loop at decision block 301.

If program 300 has not received an input video message, the user does not select viewing a video message or attachment (No at decision blocks 301, 304 and 310), program 300 checks to determine if the user wants to archive a previously received video message (decision block 316). It is well known that video data files are very large. Attempting to archive video messages in hard disk drive 134 would quickly fill the available storage space. In the preferred embodiment video messages are archived using video cassette recorder 143. As known in the art, a video cassette recorder includes: a television receiver to receive and demodulate broadcast or cable cast television signals: a video record/playback tape transport; and a signal generator similar to TV encoders 115 and 135 which supplies a modulated signal within the reception band of television receiver 141. Because a single video cassette can store several hours of video, this is a convenient way to archive video messages.

If the user indicates archiving a video message (Yes at decision block 316), then program 300 recalls the video message to be archived (decision block 317) in the same fashion as processing block 305. Program 300 then decodes the video message (processing block 318) in the same fashion as processing block 306. The decoded video is supplied to TV encoder 135 (processing block 319) in the same fashion as processing block 307. Program 300 starts video cassette recorder 143 in record mode (processing block 320). Thereafter program 300 waits until the end of the video message (processing block 321) in the same fashion as decision block 308. As previously described above, this process may involve real time decoding or the decoded video may be temporarily stored in hard disk drive 134 for later supply to TV encoder 134. Following the end of the video message (Yes at decision block 321), program 300 stops the recording of video cassette recorder 143 (processing block 322). Note that the record start and stop may be performed manually by the operator with cues from reception appliance 130 or reception appliance 130 may perform this automatically under direction of central processing unit 131. After stopping recording by video cassette recorder 143 (processing block 322), program 300 returns to the polling loop at decision block 301.

Program 300 illustrates that video message input and access are separate processes that cannot take place simultaneously. Depending on the capacity of reception appliance 130, it is feasible to receive and store a new video message (blocks 301, 302, 303 and 304) while simultaneously viewing a video message (blocks 304, 305, 306, 307, 308 and 309), accessing an attachment (blocks 310, 311, 312, 313, 314 and 315) or archiving a video message (blocks 316, 317, 318, 319, 320, 321 and 322). In this event the reception and storing of a video message proceeds autonomously while the user requests the other process.

## Claims

1. A method of video messaging comprising:
in a transmission station:
recording a video message in digital form;
transmitting the recorded video message to a predetermined reception station;
in a reception station
storing a received video message in a nonvolatile memory; and
at a time other than reception of the video message, displaying the stored video message to a user.

2. The method of video messaging of claim 1, further comprising:
in the transmission station:
encoding the digital form of the video message into an encoded video message; and
wherein said step of transmitting transmits said encoded video message;
in the reception station:
wherein said step of displaying the video message includes decoding the encoded video message into a decoded video message and displaying the decoded video message.

3. The method of video messaging of claim 1, further comprising:
in the transmission station:
generating a digital attachment file;
wherein said transmitting step includes attaching the attachment file to the video message and transmitting both the video message and the attachment file to the reception station;
in the reception station:
wherein said storing step includes storing both the video message and the attachment file;
at a time other than reception of the video message, presenting the attachment file in a manner perceivable by a user.

4. The method of video messaging of claim 3, wherein:
in the transmission station:
said attachment file consists of a word processing document;
in the reception station:
said step of presenting the attachment file includes running a word processing program compatible with the word processing document.

5. The method of video messaging of claim 3, wherein:
in the transmission station:
said attachment file consists of a spreadsheet document;
in the reception station:
said step of presenting the attachment file includes running a spread sheet program compatible with the spreadsheet document.

6. The method of video messaging of claim 3, wherein:
in the transmission station:
said attachment file consists of an audio file;
in the reception station:
said step of presenting the attachment file includes generating an aurally perceivable indication of the audio file.

7. The method of video messaging of claim 6, further comprising:
in the transmission station:
encoding the audio file into a encoded audio file; and
wherein said transmitting step transmits said encoded audio file;
in the reception station:
wherein the step of generating an aurally perceivable indication of the audio file includes decoding the encoded audio file into a decoded audio file and generating an aurally perceivable indication of the decoded audio file.

8. The method of video messaging of claim 1, wherein:
in the reception station:
said step of displaying the stored video message includes
generating a television signal modulated according
to a predetermined standard, and
receiving and displaying the television signal employing a television receiver operating according to the predetermined standard.

9. The method of video messaging of claim 1, further comprising:
in the reception station:
at a time selected by a user other than reception of the video message, archiving the video message by
generating a television signal modulated according
to a predetermined standard, and
receiving and recording the television signal employing a video cassette recorder operating according to the predetermined standard.
